(19) Europäisches Patentamt / European Patent Office / Office européen des brevets

(11) **EP 2 613 284 A1**

(12) **EUROPEAN PATENT APPLICATION**

(43) Date of publication:
**10.07.2013 Bulletin 2013/28**

(51) Int Cl.:
***G06Q 10/00*** *(2012.01)*

(21) Application number: **12191097.0**

(22) Date of filing: **02.11.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **04.01.2012  US 201213343524**<br><br>(71) Applicant: **Honeywell International Inc.**<br>**NJ 07962-2245 (US)** | (72) Inventors:<br>• **Kolbet, David Michael**<br>  **Morristown, NJ New Jersey 07962-2245 (US)**<br>• **Patankar, Ravindra**<br>  **Morristown, NJ New Jersey 07962-2245 (US)**<br>• **Magnuson, Randy R.**<br>  **Morristown, NJ New Jersey 07962-2245 (US)**<br><br>(74) Representative: **Houghton, Mark Phillip**<br>**Patent Outsourcing Limited**<br>**1 King Street**<br>**Bakewell, Derbyshire DE45 1DZ (GB)** |

(54) **Systems and methods for the solution to the joint problem of parts order scheduling and maintenance plan generation for field maintenance**

(57)     Methods and apparatus are provided for selecting a maintenance plan such that the cost of the maintenance plan is the lowest or near the lowest. The method comprises receiving a set of maintenance actions, wherein one of the repair actions is likely to repair the failure mode. The set of maintenance actions is sequenced in the increasing order of their waiting times. Each maintenance action has an associated cost equal to a waiting time cost, an execution time cost and a material cost, wherein the waiting time of each maintenance action is the time required to requisition and receive material required to perform the maintenance action. The method also constructs a maintenance plan comprising a first requisition and a second requisition by assigning each of the sequence of maintenance actions to one of the first or the second requisition.

FIG. 1

EP 2 613 284 A1

**Description**

STATEMENT REGARDING FEDERALLY SPONSORED RESEARCH OR DEVELOPMENT

This invention was made with Government support under Contract W56HZV-05-C-0724 awarded by the United States Army. The Government has certain rights in this invention.

TECHNICAL FIELD

The present invention generally relates to the logistics and repair of complex systems. Specifically, it relates to computerized systems in the field of repair parts requisition and maintenance optimization.

BACKGROUND

Man has yet to invent a useful machine or a vehicle that can function throughout its designed useful life without some kind of maintenance or repair being performed. In fact, the lack of reasonable routine maintenance or repair will shorten the useful life of any asset, particularly for complex systems such as aircraft and manufacturing processes.
When a useful asset suffers a casualty in the field, there are isolation tests that may be applied to isolate and to disambiguate the failure mode ("FM"), and then to narrow repair options down to a finite group of corrective actions ("CA"). Or otherwise, to establish that the group of CAs will not fix the FM. Each isolation test and its subsequent repair procedure have an estimated execution time necessary to complete the test or procedure.
Further, each isolation test and repair requires a certain set of tools which may or may not be immediately available. If parts and tools are not available, they will have to be requested from another location such as an intermediate maintenance facility/repair depot. The depot can always order tools and parts that are not in stock and ship them to the field location when they become available. Typically, the depot will inform the field location of the estimated time to deliver parts and tools for each isolation action ("I") and each repair action ("R") so that the field maintenance facility gets a chance to incorporate this information into a maintenance plan, calculate a maintenance requirement and place an official request for tools and parts with the depot. However, the requisition time requires an additional wait time and a time value cost for that wait time.
The traditional way of handling ambiguous failures in the field has been to order parts and tools for carrying out all the possible isolation tests at one time. Once the failure mode is isolated, the parts and tools needed for the identified corrective action are then ordered. This would be an optimum solution when all the possible repair actions are expensive (high parts cost, high execution time, and long wait times) compared to the time and costs of executing all the associated isolation tests. As such, the traditional maintenance philosophy required the field maintenance facility to place at most two requisitions, a primary requisition for all of the isolation tools and a secondary requisition for specific repair parts and tools as determined by the isolation procedures.
Further, when one isolation tool requisition is made for all probable isolation procedures. This means that when parts with a short wait-time are mixed with parts that have a long wait-time in the same order, the longer wait time parts will delay the parts that could be available earlier. There may also be a return penalty for parts that are ordered and not used. As such, the maintenance action sequence planning problem and the parts order scheduling problem are mixed and cannot be solved independently as in a traditional setting. For example, if it is assumed that all parts and tools are always on hand, there will be no need for any parts requisition and one could determine the optimal sequence of maintenance actions by applying a cost function to expected repair procedures. However, the same sequence of maintenance actions may not be optimal if different parts have different wait-times.
The traditional way is not always the best in practice. Some corrective actions could be done without performing an isolation procedure if they are inexpensive, even if the probability of success is small. For example, if there is a 1% probability that a failure may be caused by a $0.25 faulty light bulb or a 99% probability the failure is caused by a $100,000 line replaceable unit ("LRU"), then one would opt to replace the bulb without conducting the associated isolation procedure since the probability weighted cost is deminimus. The small probability cost that the bulb is the cause of the FM makes it cost effective not to do the isolation test for the bulb. Regardless of whether or not the casualty was actually fixed by the replacement bulb, a maintenance technician would have isolated the problem very quickly as to whether or not the bulb was the problem. The technician may have also repaired the problem at the same time. In this example, the objective was purely to reduce the repair cost. There could be more to the objective than cost such as time cost. There may be different times required to execute each repair or to order the parts for them. If all those are taken into account, a different action could be optimum to execute up front.
Finding an optimal solution to this problem involves knowledge of the future choices. The only way to know all possible future choices is to do an exhaustive search of all possible permutations of maintenance actions and parts ordering schedules against a cost function. The time required for executing the exhaustive search increases exponentially with the number of actions in the probable group of corrective actions and makes it impractical for field execution. Such a computationally intensive process may take days to provide a solution for a casualty that may involve only a handful of probable maintenance actions.

Accordingly, it is desirable to have a maintenance ordering and scheduling system that quickly determines the lowest cost maintenance plan for a given failure condition with multiple probable failure modes even if such a determination is sub-optimal but yet close to optimal. In addition, it is desirable to obtain a near to optimal maintenance plan that accomplishes the corrective action in no more than two supply requisitions. Furthermore, other desirable features and characteristics of the present invention will become apparent from the subsequent detailed description of the invention and the appended claims, taken in conjunction with the accompanying drawings and this background of the invention.

BRIEF SUMMARY

A method is provided for minimizing the cost of a maintenance plan for correcting a failure mode in a complex machine. The method comprises receiving a plurality of maintenance actions related to the failure mode, wherein one of the maintenance actions of the plurality is likely to repair the failure mode. Each maintenance action has an associated cost equal to a waiting time cost, an execution time cost and a material cost, wherein the waiting time of each maintenance action is the time required to requisition and receive material required to perform the maintenance action. The method also comprises constructing a plurality of different maintenance plans each comprising a sequence of maintenance actions by assigning zero or more of the maintenance actions of the sequence with the longest of the waiting times to the second requisition, each maintenance plan includes a first requisition and a second requisition. The method further comprises calculating an associated cost of each maintenance plan and determining which of the associated cost maintenance plans is lowest.

A method is provided for determining a lowest total cost maintenance plan. The method comprises receiving a sequence of maintenance actions in an order of a waiting time for each maintenance action, wherein one of the maintenance actions is likely to repair the failure mode. Each maintenance action has an associated cost equal to a waiting time cost, an execution time cost and a material cost, wherein the waiting time of each maintenance action is the time required to requisition and receive material required to perform the maintenance action. The method also constructs a maintenance plan comprising a first requisition and a second requisition by assigning each of the sequence of maintenance actions to one of the first and second requisition.

A computer readable medium is provided for. The computer readable medium includes instructions that when executed by a computing device receive a sequence of maintenance actions in an order of a waiting time for each maintenance action. Each one of the maintenance repair actions is likely to repair the failure mode and has an associated cost equal to a waiting time cost, an execution time cost and a material cost. The waiting time of each maintenance action is the time required to requisition and to receive material required to perform the maintenance action. A plurality of different maintenance plans are constructed from the sequence of maintenance actions, each maintenance plan includes a first requisition and a second requisition which are established by assigning the maintenance actions of the sequence with the longest waiting times to the second requisition. The associated cost of each maintenance plan is calculated and the lowest associated cost maintenance plan is determined.

BRIEF DESCRIPTION OF THE DRAWINGS

The present invention will hereinafter be described in conjunction with the following drawing figures, wherein like numerals denote like elements.

Figure 1 is a functional block diagram of system described herein.

Figure 2 is a simplified flow chart illustrating the exemplary embodiments disclosed herein for creating a heuristic method for optimizing a maintenance plan.

DETAILED DESCRIPTION

The following detailed description is merely exemplary in nature and is not intended to limit the invention or the application and uses of the invention. Furthermore, there is no intention to be bound by any theory presented in the preceding background or the following detailed description. Nor is there an intention to be bound by a particular data source.

A heuristic alternative method, for optimizing the costs of Correction Action ("CA") is presented herein below. When a malfunction occurs in a complex machine, the root cause may stem from one of several sources. Some root causes may be expected and some may not be readily apparent. A group of several potential root causes of a malfunction may be known as an ambiguity group or an ambiguity set. The corrective action ("CA") for the failure mode ("FM") is probably included in the ambiguity set but there is general uncertainty as to which one.

When using a traditional global search method to create a maintenance plan, a computing device executes a software application resident on a computer readable medium that searches one of more databases for each and every possible cause of the failure regardless of probability of occurrence. This creates an exhaustive ambiguity group. The software application then compiles a list of all of the repair and isolation procedures for each of the possible causes.

The global search method examines all of the possible combinations and permutations of the ambiguity set's direct costs, repair wait times and probabilities of repair success to determine the absolute optimum maintenance plan with which to affect the repair. However, the time and computational power required for such an endeavor makes a global search system cumbersome and relatively expensive.

The system and method described herein reduces costs by eliminating computational overhead by making several assumptions in order to produce an optimal or a nearly optimal maintenance plan in a faster and less expensive manner. The subject matter described herein will be disclosed by way of non-limiting examples where an equipment casualty may occur due to a particular failure mode(s).

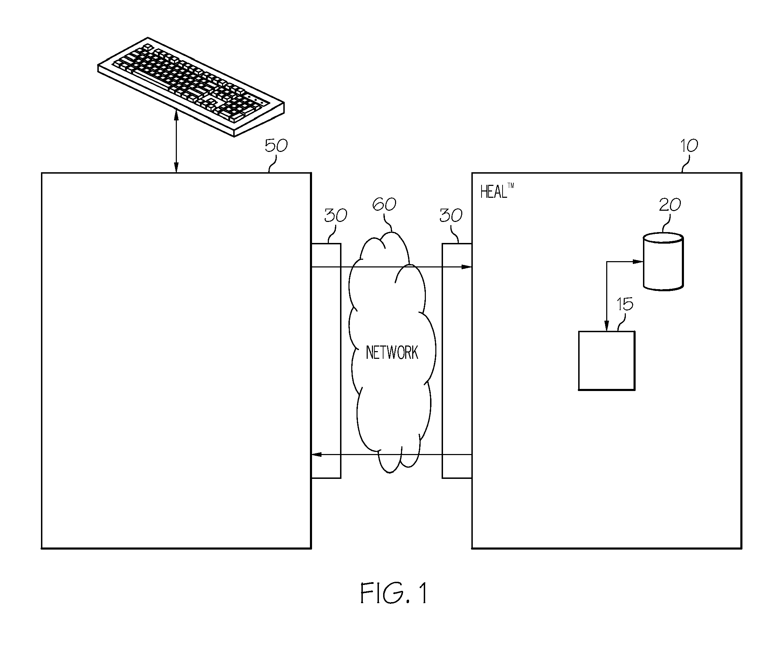

Figure 1 is a functional block diagram of a system including the subject matter disclosed herein. In an embodiment, the system 10 may be a stand alone system and communicate with a computerized diagnostics system 50 via a computer interface 30. The system 10 may be comprised of hardware, software, firmware or a combination thereof. In other embodiments, the system 10 may be a module within the computerized diagnostics system 50 or vice versa. The system 10 may also be implemented in another device or distributed over or within a network 60.

The system 10 includes a processor 15 in operable communication with both of the computer interface 30 and a memory storage device 20. Processor 15 may be any suitable type of processor that currently exists or that may exist in the future. As non-limiting examples, the processor 15 may be any suitable stand alone processor, a programmable logic device, a general purpose processor, a special purpose processor, or a co-processor. Processor 15 is also a non-limiting example of a computer readable medium.

The memory device 20 stores thereon a set of instructions that when executed by the processor 15 causes the system 10 to process a specific ambiguity set of failure modes and related corrective actions received from the computerized diagnostics system 50. The defined corrective actions may, in some embodiments be sequenced in order of an expected requisition time for each corrective action. However, one of ordinary skill in the art will recognize that the corrective actions may be sequenced using a different index.

The memory device 20 may be any suitable type of volatile or non-volatile memory devices. Exemplary, non-limiting memory devices may include flash memory, random access memory, read only memory, programmable read only memory, electronic erasable read only memory, programmable logic devices, magnetic disks, optical disks and any suitable memory devices that currently exists or is developed in the future. The foregoing memory devices are also non-limiting examples of computer readable media.

In one exemplary embodiment, a failure mode may have four likely causes (X, Y, Z and C) that are included in an ambiguity group shown in Table 1. In the context of the system 10, an ambiguity group is a set of known probable causes of the failure mode. Any of the probable causes may have caused the failure and each cause will have a probability of being the actual cause. In some ambiguity groups, it is possible for the actual cause not to be included in the group, but may be appended by other means to an ambiguity group for the purposes described herein.

Whether or not the probabilities of each failure mode of the ambiguity group cover every possible cause such that their summed probabilities total 100%, the probabilities of each failure mode making up the ambiguity group are normalized such that the sum of the probabilities in the ambiguity group will total 100%. It will be appreciated by those skilled in the art that some failure modes that are improbable may not be included in the ambiguity group for the sake of efficiency and cost reduction. An exemplary ambiguity group may look like the example in Table 1 below.

Table 1

| Failure Mode | x | Y | Z | C |
|---|---|---|---|---|
| Probability | 10% | 33% | 33% | 24% |
| Isolation Procedure | $I_x$ | $I_y$ | $I_z$ | $I_c$ |
| Repair Procedure | $R_x$ | $R_y$ | $R_z$ | $R_c$ |

The selection, probabilities and ranking of the various repairs (R) and isolation tests (I) in Table 1 may be compiled by the computerized diagnostics system 50. Exemplary, non-limiting computer based diagnostics systems that disambiguate a reported casualty into its probable causes and then ranks the isolation and repair actions related to the cause according to their wait times have been developed, and are described more fully in U.S. Patent 6,748,304 to Felke et al., which is incorporated herein by reference in their entirety.

As an output, the computerized diagnostics system 50 may produce a prioritized list of repair procedures intermingled with isolation procedures in order of ascending wait times for parts. For example the computerized diagnostics system 50 may generate the hypothetical prioritized list: $R_x$, $I_x$, $I_y$, $I_z$, $I_c$, $R_c$, $R_y$, $R_z$. Where parts for repair X may be on hand and parts for repair Z may take weeks or months to be delivered.

This particular example illustrates that, based on the wait times for parts and tools, repair X ($R_x$) should be executed first followed by isolation and repair procedures $I_x$, $I_y$, $I_z$, $I_c$, $R_c$, $R_y$, and $R_z$. Executing the actions in the order provided by the computerized diagnostics system 50 may minimize the overall wait time where all parts and tools are ordered simultaneously. If the performance of $R_x$ was unsuccessful, isolation procedures $I_y$, $I_z$ and $I_c$ would then be performed in order, followed by repair $R_c$, $R_y$, or $R_z$ as may be identified by isolation action $I_y$, $I_z$ and $I_c$. The computerized diagnostics system 50 may also determine the overall cost of ordering and performing the entire list of corrective actions.

It will be appreciated by one of ordinary skill in the art that in this simplified example that the performance of repair $R_x$ is suggested to be accomplished before the isolation procedure $I_x$ for cause X. A successful repair $R_x$ will nullify any need for conducting $I_x$ and any other repair and/or isolation procedures subsequent to completing $R_x$. If $R_x$ was unsuccessful, the need to conduct $I_x$ would still be obviated because the associated repair $R_x$ failed to clear the casualty. Therefore, the technician already knows that cause X is not the problem. However, in other exemplary embodiments, if $I_x$ is capable of detecting multiple FMs then $I_x$ should be conducted after repair $R_x$ in regard to the additional FMs.

The system 10, as described herein, would apply a wait cost minimization feature to the output of computerized diagnostics system 50. This is accomplished by displacing specific repair and isolation actions that have the longest wait times from the list provided by the computerized diagnostic system 50 into a secondary parts requisition. The system 10 thereby creates a first requisition and a second requisition, where the second requisition is placed if needed after the primary requisition has arrived and the corrective actions have been executed. The system 10 implements an iterative process. Both repair and isolation actions are removed one-by-one from the first requisition into the second requisition until a minimum cost maintenance plan is reached. The "minimum cost" comprises a materials cost and a time cost. The time cost further comprises a wait time cost (which equals the longest wait time in the requisition) and an execution time cost. In other exemplary embodiments, the minimum cost function could include other or additional variables of concern, such as personnel costs.

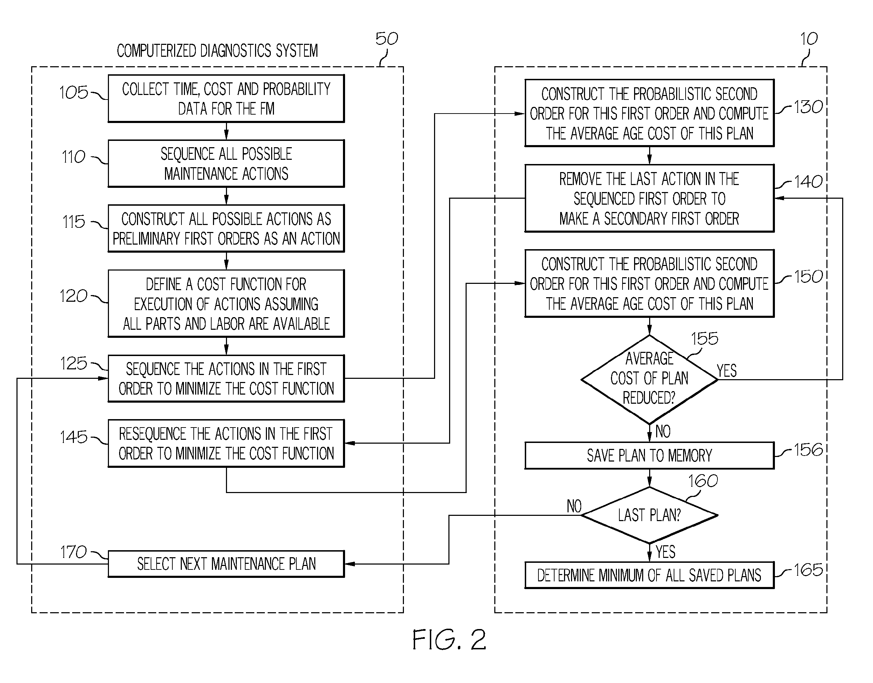

In another exemplary embodiment, the methodology implemented by the system 10 is disclosed in further detail in regard to Figure 2 using the data in Table 2. Although this relatively simple example is presented for the sake of brevity and clarity, the method below is applicable to more complex cases such as that illustrated in Table 1. It will be appreciated by those of ordinary skill in the art that the assumptions and the processes disclosed below may be altered without straying from the intended scope of this disclosure. Different failure mode assumptions may be made and logical processes may be combined, split apart, rearranged and substituted with similar processes and still fall within the intended scope of the subject matter disclosed herein.

In one exemplary embodiment, the basic assumptions of the method include:

1) The likelihood of each FM occurring in an ambiguity set is normalized to be the probabilities of each FM occurring.

2) There is only one cause in the ambiguity set so the probabilities of each FM sum to total 100%.

3) Parts and tools needed for a maintenance action will be requested from a depot using no more than two requisitions and are available at the depot or on hand. If they are not available, the estimated time of when they will be made available is known.

Table 2 below is a simple two FM data chart where the cost function of the overall maintenance action will be assumed to equal the dollar cost of tools and parts plus the time value costs of any wait time and the time to repair.

Table 2

| Failure Mode | 1 | 2 |
|---|---|---|
| Probability of Occurrence | 80% | 20% |
| Isolation Cost (IC) | 0 $ | 20$ |
| Repair Cost (RC) | 40 $ | 10$ |
| Execution Time Isolation (EI) | 10 $ | 10 $ |
| Execution Time Repair (ER) | 20 $ | 10 $ |
| Waiting Time Isolation (WI) | 11 $ | 1 $ |
| Waiting Time Repair (WR) | 0 $ | 10 $ |

Figure 2 is a flow chart of the method using the exemplary two-failure-mode ambiguity data of Table 2. Having been presented with the pertinent casualty data, a computerized diagnostics system 50 determines that there are two (n=2) likely failure modes (1 and 2) in the ambiguity group, produces a list of four (2n) repair and isolation actions and determines the cost data for each repair ($RC_1$ and $RC_2$) and each isolation ($IC_1$ and $IC_2$) at process 105.

At process 110, the computerized diagnostics system sequences the four possible actions in an increasing order of logistics wait time cost, for example, isolation wait time cost (WI) and repair wait time cost (WR). As such, the corrective actions are grouped together where each group of equal wait times is arranged in order of ascending wait time costs (WI and WR). According to Table 2 the list would could be $R_1$ (0), $I_2$ (1), $R_2$ (10), $I_1$ (11).

It should be noted that if the waiting time cost for $I_1$ and $I_2$ were $10 and $0, respectively instead of 11 hours and 1 hour, the list may have any of the orders ($R_1$, $I_2$, $R_2$, $I_1$), ($R_1$, $I_2$, $I_1$, $R_2$), ($I_2$, $R_1$, $R_2$, $I_1$) or ($I_2$, $R_1$, $I_1$, $R_2$). This is so because the wait time cost of R1 and I2 would both be zero and the wait times of $I_1$ and $R_2$ would both be 10. Given this flexibility, under these assumptions, the identical wait time actions in this order may be sequenced as per the minimum cost sequence determined by the process in 125.

At process 115, all possible first requisition combinations are determined. In the non-limiting example, there are four possible primary requisitions for tools and parts given their wait time order and the superset of the resulting secondary requisitions. The actual secondary requisition will be determined via optimization after the result information for the execution of actions in the first requisition is available. Note that multiple possibilities exist for the second requisition for a given first requisition. For example, for case 4 in Table 3, {I2, R2} could be a second requisition or {R2} alone could be the second requisition or the second requisition could be a null set if the execution of R1 in the first requisition fixed the problem.

Table 3

| First Order | Superset of Second Orders |
|---|---|
| 1) $R_1$, $I_2$, $R_2$, $I_1$ | -- |
| 2) $R_1$, $I_2$, $R_2$ | $I_1$ |
| 3) $R_1$, $I_2$ | $R_2$, $I_1$ |
| 4) $R_1$ | $I_2$, $R_2$, $I_1$ |

It will be appreciated by those skilled in the art that adding more procedures requires more computing time as the complexity of the plan grows exponentially

At process 120, a cost function is defined by the computerized diagnostics system 50 for evaluating the cost of each set of requisitions. Although other cost elements may be included as the situation so requires, a basic cost function for one known requisition will generally have the form:

Requisition Cost = $\Sigma$ tool and part costs + C {maximum waiting time value for any part in the requisition + weighted average execution time value of the actions related to the requisition}

Where, the value of parameter C determines relative importance of cost and time to the user. For this exemplary embodiment, C may equal 0.5. The total cost of a maintenance plan is the sum of the costs for the two requisitions in that maintenance plan. For a given first requisition, different corresponding second requisitions may be possible depending on the outcomes of the actions in the first requisition. These corresponding second requisitions form a set of possible corresponding second requisitions; each corresponding second requisition in the set will have a known probability. The total cost of the second requisition will be probability weighted costs of all these possible second requisitions in the superset.

At process 125, the maintenance actions in the primary requisition ($R_1$, $I_2$, $R_2$, $I_1$) are sequenced by the computerized diagnostic system 50 to minimize the cost function assuming that all parts and tools are instantaneously available, the lowest cost sequence for the chosen primary requisition ($R_1$, $I_2$, $R_2$, $I_1$) is ($I_1$-$R_1$-$R_2$) . Since $I_2$ is not needed in this chosen execution sequence of the first requisition, the first requisition effectively reduces to ($I_1$, $R_1$, $R_2$) from ($R_1$, $I_2$, $R_2$, $I_1$). The execution cost for the first requisition ($I_1$, $R_1$, $R_2$) based on Table 2 is:

$$\text{Cost} = IC_1 + (P_2) \times RC_2 + (P_1) \times RC_1$$
$$= \ 0 \ + (.8 \times 40) + (.2 \times 10)$$
$$= \$34$$

where,

$IC_1$, = cost of performing $I_1$;
$P_2$ is the probability of $R_2$ correcting the problem;
$P_1$ is the probability of $R_1$ correcting the problem;
$RC_2$ is the cost of performing $R_2$ and
$RC_1$ is the cost of performing $R_1$

It will be appreciated by one of ordinary skill in the art that the cost for isolation action $IC_2$ in the sequence are dropped from the equation because $I_2$ is the last action in the sequence and is essentially not worth performing or evaluating. As a principle, it may be dropped from the calculation. As such, the execution cost for $(I_1-R_1-R_2)$ is $34.

At process 130, the cost of the second requisition is calculated. However, because a second requisition will not be needed for this particular first requisition, the cost of the second requisition is zero. The first plan based on the first requisition is received and recorded by the system 10.

The cost of the maintenance plan with first requisition $(I_1, R_1, R_2)$ and no second requisition is computed using,
the waiting time = MAX($WI_1$, $WR_1$, $WR_2$) hr = $WI_1$ = 11;
the total execution time = $(EI_1+ P(2) EI_2+ER_1)$= (10 + .8*(20) + .2*(10)) = $28; therefore,
the total time value = $28 + $11 = $39; and
the total cost of the maintenance plan = ($34 + 0.5 x $39) = $53.50 = execution cost + time cost.

At process 140, the last maintenance action $R_2$ in the waiting time sequence is kicked out of the primary first requisition and placed into the superset of the possible corresponding second requisition actions to create a secondary first requisition $(I_1, R_1)$. At process 145, the system 10 sends the second requisition to the computerized diagnostics system 50 which sequences the maintenance actions in the second requisition corresponding to $(I_1, R_1)$ as the first requisition in order to reduce the cost of the second requisition. Since, at this point there is only a single maintenance action $R_2$, the only possible sequence of the second requisition is $R_2$ if the execution of the maintenance plan for the first requisition failed to fix the problem. The other possibility is a null action set for the second requisition if the problem got fixed by execution of the actions in the secondary first requisition $(I_1, R_1)$.

At process 150, the system 10 re-evaluates the cost of the first requisition and the corresponding second requisition based upon the cost function. The first requisition sequence is now $I_1, R_1$. The second requisition sequence is $R_2$ with a probability of 20% ($P_2$) because the probability of that the casualty being repaired using the primary first requisition with $R_1$ is 80% (i.e. probability of being the cause) and the secondary requisition will never have to be placed.

The total execution cost for both the first and the second requisitions based on Table 2 is, then:

$$
\begin{aligned}
Cost &= IC_1 + (P_2)*RC_2 + (P_1)*RC_1 \\
&= \ 0 \ + (.8*40) + (.2*10) \\
&= \$34
\end{aligned}
$$

The total cost of the complete maintenance plan with the secondary first requisition $(R_1, I_1)$ and the corresponding second requisition R2 is now the wait time cost of the first requisition $(R_1, I_1)$ and the probability weighted wait time cost of the second requisition $R_2$ plus the total execution time costs and the parts and tools. The total cost of the maintenance plan which includes first requisition (I1,R1) and if needed a second requisition R2 is calculated as follows:

the waiting time = MAX($WI_1$,$WR_1$)+ .2*$WR_2$ = $11 + .2*$10 = $13;
the total execution time = $(EI_1+ P(2) EI_2+ER_1)$= (10 + .8*(20) + .2*(10)) = $28; therefore,
the total time value = $41; and
the total cost of the maintenance plan = ($34 + $41/2) = $54.5

The displacement of $R_2$ from the primary first requisition to a possible second requisition kept the total plan's total parts and tools cost the same at $34. However, the additional 20% probability that the maintenance plan would have to wait 10 additional hours for the second requisition to arrive, should the first fail, would drive the probable wait time up to $13 from $11. In this case, kicking out the longest delayed tools and parts to a second requisition actually increased the probable cost of the maintenance plan.

At decision point 155, it is determined whether the cost of the second plan is more or less costly than the previous plan. If the second plan is more costly, the method ends and the previous plan is placed in memory at process 156. If the second plan is less costly, then the method loops to process 140 where the next to last maintenance action in the first requisition sequence is also displaced into the second requisition and the process continues until the total cost of a plan actually rises as compared to the immediately prior plan.

At decision point 160, it is determined if a minimum cost plan for each of the sequences in Table 3 have been determined. If not, then the process loops back to process 120 where the next sequence received from the computerized diagnostic system 50 (See, Table 3) is processed as was the first two. If a minimum cost plan for all of the sequences in Table 3 is determined, the process ends and the lowest cost plan in memory is rendered to a user at process 165.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A method for minimizing the cost of a maintenance plan for correcting a failure mode in a complex machine, comprising:

   at a computing device, receiving a plurality of maintenance actions related to the failure mode of the complex machine, wherein one of the maintenance actions of the plurality is likely to repair the failure mode, each maintenance action having an associated cost equal to a waiting time cost, an execution time cost and a material cost, wherein the waiting time of each maintenance action is the time required to requisition and receive material required to perform the maintenance action;
   constructing a plurality of different maintenance plans each comprising a sequence of maintenance actions by assigning zero or more of the maintenance actions of the sequence with the longest of the waiting times to the second requisition, wherein each maintenance plan includes a first requisition and a second requisition;
   calculating an associated cost of each maintenance plan; and
   determining which of the associated cost maintenance plans is lowest.

2. The method of claim 1, wherein the waiting time cost of a maintenance plan equals the longest waiting time cost of all of the maintenance actions assigned to the primary requisition plus a probability weighted average waiting cost of all the maintenance actions assigned to the secondary requisition, wherein each probability weight is the probability that each of the failure modes is the underlying cause of the casualty.

3. The method of claim 2, wherein the sum of all probability weights of all of the failure modes equals 100%.

4. The method of claim 1, wherein the likelihood of isolating and repairing the failure mode by a maintenance action related to the failure mode is 100%.

5. The method of claim 4, wherein when the maintenance action with the longest wait time cost is an isolation action, then deleting the isolation action.

6. The method of claim 4 wherein the execution time cost is equal to the average total execution time cost for the maintenance plan.

7. The method of claim 6, wherein the average total execution time cost is equal to the probability weighted sum of all of the execution time costs for each action in the sequence of maintenance actions, wherein each probability weight is the probability that each respective maintenance action will need to be executed while following the action sequence in the maintenance plan.

8. The method of claim 4, wherein the average total material cost is equal to a probability weighted average material cost where the probability is that the material will need to be requisitioned for the repair.

9. The method of claim 8, wherein the weighted average material cost is equal to the probability weighted sum of all of the material costs for each action in the sequence of maintenance actions, wherein each probability weight is the probability that each respective action will need to be executed while following the action sequence in the maintenance plan.

10. A computer readable medium with instructions stored thereon that when executed by a computing device causes acts to be performed, the acts comprising:

    receiving a sequence of maintenance actions in an order of a waiting time for each maintenance action, wherein one of the maintenance actions is likely to repair the failure mode, each maintenance action having an associated cost equal to a waiting time cost, an execution time cost and a material cost, wherein the waiting time of each maintenance action is the time required to requisition and receive material required to perform the maintenance action;
    constructing a plurality of different maintenance plans from the sequence of maintenance actions, each maintenance plan including a first requisition and a second requisition, by assigning zero or more of the maintenance actions of the sequence with the longest of the waiting times to the secondary requisition;
    calculate an associated cost of each maintenance plan; and
    determine which of the associated cost maintenance plan is lowest.

11. The method of claim 10, wherein the waiting time cost of a maintenance plan equals the longest waiting time cost of all of the maintenance actions assigned to the first requisition plus a probability weighted average waiting cost of all the maintenance actions assigned to the second requisition, wherein each probability weight is the probability that each respective maintenance action repairs the failure mode.

12. The method of claim 11, wherein the sum of all probability weights of individual failure modes being the cause of the underlying casualty equals 100%.

13. The method of claim 10, wherein the maintenance actions are one of a repair action and an isolation action.

14. The method of claim 11, wherein when the maintenance action with the longest wait time cost is an isolation action, then deleting the isolation action.

FIG. 1

COMPUTERIZED DIAGNOSTICS SYSTEM 50

10

105 — COLLECT TIME, COST AND PROBABILITY DATA FOR THE FM

110 — SEQUENCE ALL POSSIBLE MAINTENANCE ACTIONS

115 — CONSTRUCT ALL POSSIBLE ACTIONS AS PRELIMINARY FIRST ORDERS AS AN ACTION

120 — DEFINE A COST FUNCTION FOR EXECUTION OF ACTIONS ASSUMING ALL PARTS AND LABOR ARE AVAILABLE

125 — SEQUENCE THE ACTIONS IN THE FIRST ORDER TO MINIMIZE THE COST FUNCTION

145 — RESEQUENCE THE ACTIONS IN THE FIRST ORDER TO MINIMIZE THE COST FUNCTION

170 — SELECT NEXT MAINTENANCE PLAN

130 — CONSTRUCT THE PROBABILISTIC SECOND ORDER FOR THIS FIRST ORDER AND COMPUTE THE AVERAGE AGE COST OF THIS PLAN

140 — REMOVE THE LAST ACTION IN THE SEQUENCED FIRST ORDER TO MAKE A SECONDARY FIRST ORDER

150 — CONSTRUCT THE PROBABILISTIC SECOND ORDER FOR THIS FIRST ORDER AND COMPUTE THE AVERAGE AGE COST OF THIS PLAN

155 — AVERAGE COST OF PLAN REDUCED?
YES
NO

156 — SAVE PLAN TO MEMORY

160 — LAST PLAN?
NO
YES

165 — DETERMINE MINIMUM OF ALL SAVED PLANS

FIG. 2

EP 2 613 284 A1

Europäisches Patentamt
European Patent Office
Office européen des brevets

**EUROPEAN SEARCH REPORT**

Application Number
EP 12 19 1097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/039499 A1 (FELKE TIMOTHY J [US] ET AL) 26 February 2004 (2004-02-26) * the whole document * | 1-14 | INV. G06Q10/00 |
| X | US 2008/195365 A1 (OHKURA YASUNORI [JP] ET AL) 14 August 2008 (2008-08-14) * the whole document * | 1-14 | |
| X | JP 2004 220460 A (HITACHI LTD) 5 August 2004 (2004-08-05) * the whole document * | 1-14 | |

TECHNICAL FIELDS SEARCHED (IPC)

G06Q

The present search report has been drawn up for all claims

| Place of search | Date of completion of the search | Examiner |
|---|---|---|
| Munich | 1 February 2013 | Lopes Margarido, C |

**EP 2 613 284 A1**

## ANNEX TO THE EUROPEAN SEARCH REPORT
## ON EUROPEAN PATENT APPLICATION NO.

EP 12 19 1097

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2013

| Patent document cited in search report | | Publication date | Patent family member(s) | | Publication date |
|---|---|---|---|---|---|
| US 2004039499 | A1 | 26-02-2004 | AU 2003260054 A1 | | 11-03-2004 |
| | | | CA 2496996 A1 | | 04-03-2004 |
| | | | CN 1689000 A | | 26-10-2005 |
| | | | EP 1540530 A2 | | 15-06-2005 |
| | | | US 2004039499 A1 | | 26-02-2004 |
| | | | WO 2004019235 A2 | | 04-03-2004 |
| US 2008195365 | A1 | 14-08-2008 | AU 2005238350 A1 | | 10-11-2005 |
| | | | CA 2562946 A1 | | 10-11-2005 |
| | | | CN 1954122 A | | 25-04-2007 |
| | | | JP 4884214 B2 | | 29-02-2012 |
| | | | US 2008195365 A1 | | 14-08-2008 |
| | | | WO 2005106139 A1 | | 10-11-2005 |
| JP 2004220460 | A | 05-08-2004 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6748304 B, Felke